# EUROPÄISCHE PATENTSCHRIFT

(11) **EP 3 043 958 B1**
(45) Veröffentlichungstag und Bekanntmachung des Hinweises auf die Patenterteilung: **24.03.2021**
(21) Anmeldenummer: 14758354.6
(22) Anmeldetag: 28.08.2014
(51) Int. Cl.: B24B 33/02, B24B 33/08, B23B 29/034

(54) **ZUSTELLVORRICHTUNG ZUR ERZEUGUNG EINER SEKUNDÄREN ZUSTELLBEWEGUNG EINES WERKZEUGS**
ADVANCING DEVICE FOR GENERATING A SECONDARY ADVANCING MOVEMENT OF A TOOL
DISPOSITIF D'APPROCHE POUR GÉNÉRER UN MOUVEMENT D'APPROCHE SECONDAIRE D'UN OUTIL

(30) Priorität: 11.10.2013 DE 102013220507
(43) Veröffentlichungstag der Anmeldung: 20.07.2016
(73) Patentinhaber: Gehring Technologies GmbH, 73760 Ostfildern (DE)
(72) Erfinder: WIENS, Andreas, 74343 Sachsenheim (DE); WAIBLINGER, Manuel, 70182 Stuttgart (DE); WAGNER, Andreas, 73066 Uhingen (DE); LITTY, Klaus, 71394 Kernen (DE)
(74) Vertreter: DREISS Patentanwälte PartG mbB
(86) Internationale Anmeldenummer: PCT/EP2014/068254
(87) Internationale Veröffentlichungsnummer: WO 2015/051947

(56) Entgegenhaltungen:
- EP-A1- 2 277 662
- DE-A1-102008 064 592
- US-A- 4 173 847

## Beschreibung

Die Erfindung betrifft eine Vorrichtung zur Erzeugung einer nicht zylindrischen Innenfläche einer Bohrung nach dem Oberbegriff des Anspruchs 1. Außerdem betrifft die Erfindung ein Verfahren zur Erzeugung einer nicht zylindrischen Innenfläche einer Bohrung nach dem Oberbegriff des Anspruchs 9 sowie ein Steuergerät zum Betreiben einer Vorrichtung zur Erzeugung einer nicht zylindrischen Innenfläche einer Bohrung nach dem Oberbegriff des Anspruchs 13.

Bei der in Rede stehenden Vorrichtung zur Bearbeitung einer Bohrung handelt es sich vorzugsweise, aber nicht beschränkt darauf, um eine Vorrichtung zur Bearbeitung von Bohrungen durch Honen.

Gehonte Bohrungen müssen eine vorgegebene Geometrie sehr präzise einhalten. Allerdings werden manche Werkstücke mit gehonten Bohrungen bei der Montage (mechanische Verspannung) und/oder während des Betriebs aufgrund von Kräften oder durch temperaturbedingte Verformungen unrund. Diese Formänderungen sind Veränderungen gegenüber einer an sich idealen Zylinderform. Um solche Formänderungen schon beim Honen prozesssicher und wirtschaftlich zu kompensieren, werden die Bohrungen gezielt mit einer nicht zylindrischen Bohrungsoberfläche versehen, die dann infolge der sich einstellenden Verformungen die gewünschte zylindrische Form annimmt.

Das oben genannte Problem wird durch Konstruktionen von Maschinen und Aggregaten durch Leichtbau und Dünnwandigkeit zunehmend verstärkt. Daraus resultiert eine mangelnde Steifigkeit, so dass sich die Bauteile, bspw. während einer Montage, verformen, wodurch ein Verlust an Funktionsgüte entsteht. Um diesen nachteiligen Einfluss zu vermeiden, sind entsprechend der Lasteinwirkung geometrische Freiformen notwendig, welche sich von den geometrischen Idealformen deutlich unterscheiden. Es erfolgt ein fertigungstechnischer Vorhalt von Verformungszuständen, welcher unter Betriebsbedingungen zu quasi idealen Bauteilgeometrien führt und somit Verformungseinflüsse kompensiert.

Für die Bearbeitung von Zylinderbohrungen von Brennkraftmaschinen ist das sogenannte Formhonen bekannt. Das Formhonen erlaubt es, Freiformflächen zu gestalten, die lokal von der idealen Zylinderform abweichen. Beispielsweise beschreibt die EP 2 277 662 Al ein Verfahren zur Herstellung von nicht zylindrischen Bohrungen. Die dynamische Zustellung der Werkzeugschneiden erfolgt individuell durch radial wirkende Piezosteller im Werkzeug. Neben den hohen Werkzeugkosten ist diese Lösung konstruktionsbedingt erst ab einem Durchmesser von ca. 70 mm geeignet.

Die DE 10 2008 064 592 A1 zeigt eine Zustelleinrichtung, deren Antrieb zum Verstellen der Honleisten piezo-hydraulisch arbeitet. Diese Hybridvariante ermöglicht eine höhere Anzahl von Honleisten im Werkzeug. Auch hier sind die Kosten sehr hoch.

Die DE 10 2007 038 123 A1 zeigt ebenfalls eine Vorrichtung zur Erzeugung nicht zylindrischer Bohrungsflächen. Die Werkzeugschneiden eines Bearbeitungswerkzeugs (Honleisten mit gebundenem Schneidkorn oder Schneidkante einer Schneidplatte) können einzeln und unabhängig voneinander in Abhängigkeit der Position in der Bohrung unterschiedlich weit radial zugestellt werden. Dies ist z.B. durch vier koaxial angeordnete Piezosteller in der Zustelleinrichtung der Maschine möglich, wobei eine Zustellstange axial angeordnet ist. Damit ist die Herstellung beliebiger Freiformen möglich, deren nicht zylindrische Mantelflächen durch Raumkoordinaten definiert sind.

Häufig werden nicht beliebige Freiformen gefordert, sondern nicht zylindrische Formen mit harmonischen Querschnittsformen (zum Beispiel in der 2. bis 4. Ordnung, Ovale, Gleichdicke oder "Kleeblätter") und/oder kegelstumpfförmige Bohrungen mit rundem Querschnitt (0. Ordnung) oder den oben erwähnten harmonischen Querschnittsformen höherer Ordnung. Zur Herstellung solcher Formen sind die aus dem Stand der Technik bekannten Vorrichtungen zu teuer und sind nur bei größeren Bohrungen (D ≥ 70 mm) einsetzbar.

Aufgabe der Erfindung ist es daher, eine Vorrichtung zu schaffen, die auch für die Bearbeitung von Bohrungen mit weniger als 70 mm Durchmesser eingesetzt werden kann, wobei die Vorrichtung einfach aufgebaut sein soll, relativ geringe Anforderungen an die Maschinensteuerung stellen soll, nachrüstbar und kostengünstig sein soll.

Zur Lösung der Aufgabe wird erfindungsgemäß eine Vorrichtung nach Anspruch 1 vorgeschlagen.

Die erfindungsgemäße Vorrichtung dient vorzugsweise zum Formhonen von Bohrungen. Das Primärzustellsystem erzeugt dabei eine Zustellbewegung der herkömmlichen Art. Das erfindungsgemäße Sekundärzustellsystem überlagert der Primärzustellbewegung dynamisch die erfindungsgemäße Sekundärzustellbewegung.

Die Gesamtzustellbewegung entsteht somit durch die Addition beider Zustellbewegungen beziehungsweise beider Zustellkräfte. Das erfindungsgemäße Sekundärzustellsystem erzeugt die zusätzliche Zustellbewegung vorzugsweise in Abhängigkeit einer aktuellen Drehund/oder Hubposition des Bearbeitungswerkzeugs. Die Steuerung wird von der Maschinensteuerung übernommen oder geschieht in einem separaten Steuergerät, das beispielsweise auf der Basis von Signalen von meist an der Honmaschine ohnehin vorhandenen Sensoren die aktuelle Dreh- und/oder Hubposition des Werkzeugs ermittelt und die sekundäre Zustellbewegung auslöst.

Die Zustellbewegung wird dabei durch die Zustellstange übertragen, die koaxial in der Vorrichtung zur Erzeugung der nicht zylindrischen Innenfläche der Bohrung angeordnet ist. Die erfindungsgemäße Vorrichtung ist einfach und kompakt aufgebaut und deshalb dazu geeignet, auch Bohrungen zu bearbeiten, die einen Durchmesser von deutlich weniger als 70 mm aufweisen. Es können Bohrungen mit Durchmessern von z.B. 10 mm problemlos bearbeitet werden. Auch kleinere Bohrungen sind bearbeitbar.

Die dynamische Überlagerung der durch das erfindungsgemäße Primärzustellsystem erzeugten Zustellbewegung durch die Zustellbewegung des Sekundärzustellsystems, erfolgt z.B. positionsabhängig. Das bedeutet, dass in Abhängigkeit einer bestimmten Hub- oder Drehposition der Bearbeitungswerkzeuge in der Bohrung bzw. der Zustellstange, eine dynamische zusätzliche Beaufschlagung der Bearbeitungswerkzeuge lokal erfolgt. Dabei entstehen dort zusätzliche Materialabträge, welche die gewünschte nicht zylindrische Form erzeugen.

Bohrungen mit derartig bearbeiteten Bohrungsflächen führen beispielsweise bei den Pumpenelementen von Kraftstoffeinspritzpumpen zu verbesserten volumetrischen Wirkungsgraden, geringerem Verschleiß und höheren Förderdrücken.

Die Bearbeitungswerkzeuge weisen in der Regel Honleisten mit gebundenen Schleifkörnern auf. Statt den Schneidleisten mit integrierten Schleifkörnern, kann das Werkzeug auch Schneidplatten mit geometrisch bestimmter Schneide aufweisen, so dass in der erfindungsgemäßen Vorrichtung statt eines Formhonens ein Formbohren realisiert werden kann.

In einer bevorzugten Ausführungsform wird vorgeschlagen, dass das Sekundärzustellsystem einen Piezosteller umfasst. Der Piezosteller ist vorzugsweise als piezo-elektrischer Linearaktor ausgebildet. Durch eine elektrische Ansteuerung wird der Piezosteller aktiviert, wobei er sich insbesondere in axialer Richtung temporär ausdehnt. Diese Ausdehnung wird der durch das Primärzustellsystem erzeugten Zustellbewegung additiv überlagert. Dadurch wird temporär eine zusätzliche axiale Bewegung der Zustellstange mit einer bestimmten Kraft und Geschwindigkeit zur radialen Zustellung der Bearbeitungswerkzeuge erzeugt. Dabei können z.B. konische Flächen der axial verlaufenden Zustellstange mit komplementär verlaufenden Zustellflächen der Bearbeitungswerkzeuge in bekannter Weise zusammen wirken, sodass die axiale Bewegung der Zustellstange in eine radiale Zustellbewegung der Bearbeitungswerkzeuge umgelenkt wird.

Grundsätzlich kann die zu überlagernde Zustellbewegung durch das Sekundärzustellsystem in beliebiger Weise, also elektromechanisch oder hydraulisch sowie kraft- oder weggesteuert erfolgen.

Vorzugsweise ist das Sekundärzustellsystem zentrisch beziehungsweise koaxial im Primärzustellsystem angeordnet. Dies führt zu einer sehr kompakten Vorrichtung, die dazu geeignet ist, nicht zylindrische Bohrungen mit Querschnittsformen auch höherer Ordnung herzustellen.

Die Amplitude der sekundären Zustellbewegung kann entlang der Bohrungslänge verändert werden. Dabei können herkömmliche Werkzeuge eingesetzt werden; sodass nur Kosten für das erfindungsgemäße Sekundärzustellsystem und dessen Integration in die Primärzustelleinrichtung entstehen.

Zum Erreichen unterschiedlicher Querschnittsformen n-ter Ordnung können Werkzeuge mit "n" Honleisten eingesetzt werden. Ein Kleeblattquerschnitt (4. Ordnung) kann z. B. mit einem 4-teiligen Werkzeug (4 Honleisten) erzeugt werden, wenn die Sekundärzustellung jeweils nach einer Drehung des Werkzeugs von 90° kurzzeitig aktiviert wird. Ein konischer Verlauf einer solchen Querschnittsform ist damit realisierbar, da das Maß des Zustellweges über die Bohrungslänge je nach gewünschtem Mantellinienverlauf variiert werden kann.

Grundsätzlich besteht die Möglichkeit mit einem einteiligen Bearbeitungswerkzeug zu arbeiten. Dabei sind nahezu alle Freiformen möglich, die Bearbeitungsdauer ist jedoch höher als bei einem mehrteiligen Werkzeug.

In der erfindungsgemäßen Vorrichtung können bevorzugt mehrere Bearbeitungswerkzeuge durch eine einzige Zustellstange bewegt werden. Die Bearbeitungswerkzeuge sind dabei vorzugsweise in einem gleichen Winkel zueinander angeordnet. Das bedeutet, sind bspw. vier Bearbeitungswerkzeuge vorgesehen, so sind diese in einem Winkel von jeweils 90° um die Zustellstange angeordnet; sind bspw. nur drei Bearbeitungswerkzeuge vorgesehen, so sind diese jeweils in einem Winkel von 120° um die Zustellstange angeordnet.

Das Sekundärzustellsystem kann in der erfindungsgemäßen Vorrichtung eine Hub- und Drehbewegung des Primärzustellsystems mit ausführen. Die elektrische Versorgung erfolgt dabei bspw. über Schleifkontakte. Auch berührungslose induktive Übertragungssysteme sind denkbar. Damit entspricht die erfindungsgemäße Vorrichtung bei einer Sicht von außen den bekannten Vorrichtungen zur Erzeugung einer Bohrung mit entlang des Umfangs der Bohrung angeordneten und auf die Innenfläche der Bohrung radial zustellbaren Bearbeitungswerkzeugen (Honwerkzeugen).

Alternativ dazu kann das Sekundärzustellsystem auch von der Drehbewegung des Primärzustellsystems entkoppelt sein. Dabei kann bspw. eine Drehbewegung einer Spindel der erfindungsgemäßen Vorrichtung über Drehlager entkoppelt werden. Das bringt den Vorteil, dass die Schleifkontakte (z.B. ein Drehverteiler) zur elektrischen Versorgung des Piezostellers entfallen können, da der Piezosteller rotatorisch von der Spindel und von der Zustellstange abgekoppelt ist.

Ferner ist es möglich, dass das Sekundärzustellsystem in axialer Richtung dem Primärzustellsystem nachgelagert ist. dabei führt das Primärzustellsystem die bekannte Dreh- und Hubbewegung aus, wobei das nachgelagerte Sekundärzustellsystem wunschgemäß adaptierbar ist. Dadurch wird die dynamische zusätzliche Beaufschlagung der Bearbeitungswerkzeuge realisiert.

Außerdem ist möglich, dass das Sekundärzustellsystem impulsweise Zustelldruckspitzen erzeugt. Dabei können Zustelldruckspitzen erzeugt werden, die bspw. dazu dienen, die Selbstschärfung der Schneidleisten zu fördern. Durch diese Druckspitzen entsteht ein erhöhter Bindungsverschleiß, so dass neue erhabene Schneidkristalle während des Honens zur Verfügung stehen.

Im erfindungsgemäßen Verfahren ist es außerdem möglich, dass das Sekundärzustellsystem von vorn herein elektrisch vorgespannt wird, wobei das Sekundärzustellsystem bei einem Zurückfahren der Vorrichtung entlastet wird, indem eine zuvor angelegte Spannung reduziert wird. Dadurch ist ein positionsgesteuertes Entlasten der Bearbeitungswerkzeuge möglich, um bspw. in Kantenbereichen der Bohrung, z.B. an Hubumkehrpunkten parabolische Hubumkehrspuren zu vermeiden. Das Sekundärzustellsystem kann auch in Abhängigkeit einer aktuellen Werkzeugposition, einer bestimmten Zustellkraft oder zu einem bestimmten Zeitpunkt aktiviert werden.

Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf jeweils explizit hingewiesen wird.

Nachfolgend werden anhand der Figuren Ausführungsbeispiele der Erfindung beispielhaft erläutert. Es zeigen:
Figur 1 eine Honmaschine aus dem Stand der Technik;
Figur 2 ein erfindungsgemäßes Primärzustellsystem in einer ersten Ausführungsform;
Figur 3 ein erfindungsgemäßes Primärzustellsystem in einer zweiten Ausführungsform;
Figur 4 eine erste mit der erfindungsgemäßen Vorrichtung herstellbaren nicht zylindrische Bohrung in einer perspektivischen Darstellung;
Figur 5 eine zweite mit der erfindungsgemäßen Vorrichtung herstellbaren nicht zylindrische Bohrung in einer perspektivischen Darstellung; und
Figur 6 eine dritte mit der erfindungsgemäßen Vorrichtung herstellbaren nicht zylindrische Bohrung in einer perspektivischen Darstellung.

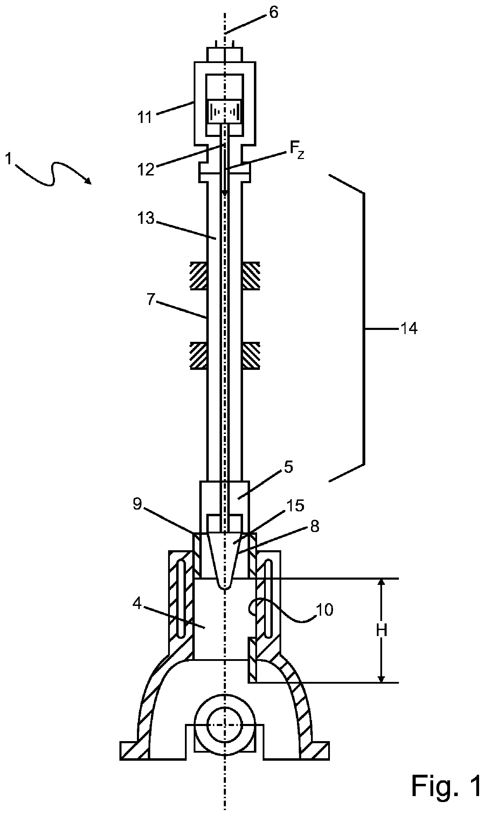

Figur 1 zeigt eine Honvorrichtung 1 aus dem Stand der Technik. Die Honvorrichtung 1 bearbeitet eine Zylinderbohrung 4 durch ein in bekannter Weise rotierend angetriebenes Honwerkzeug 5, wobei das Honwerkzeug 5 zusätzlich zur rotierenden Bewegung eine oszillierende Hubbewegung ausführt.

Das Honwerkzeug 5 ist zu diesem Zweck mit einer Spindel 7 verbunden, die Teil einer nicht gezeigten Honmaschine ist und von einem z.B. hydraulischen oder elektromechanischen Hubantrieb in Richtung der Längsachse der zu bearbeitenden Bohrung beziehungsweise Innenfläche 10 hin- und herbewegbar ist. Die Spindel 7 wird außerdem in bekannter Weise von einem (nicht gezeigten) Drehantrieb um ihre Längsachse 6 drehend angetrieben. Das Honwerkzeug 5 trägt als Honsteine ausgebildete Bearbeitungswerkzeuge 9, die von einer hydraulisch betätigten Zustelleinrichtung radial nach außen zustellbar und an eine Innenfläche 10 der Zylinderbohrung 4 andrückbar sind. Die Zustelleinrichtung könnte bspw. auch elektrisch über einen Stellmotor betätigt werden. Die hydraulische Betätigung der Zustelleinrichtung besteht aus einer Kolben-Zylinder-Anordnung 11, deren Kolbenstange 12 über eine durch die Spindel 7 hindurch zum Honwerkzeug 5 axial geführte Zustellstange 13 auf die Oberseite eines Zustellkonus 15 des Honwerkzeugs 5 drückt.

Der Bereich der Zustellstange 13 wird im Folgenden als Primärzustellsystem 14 bezeichnet, wobei die Zustelleinrichtung eine Primärzustellkraft F_{Z} auf das Primärzustellsystem 14 überträgt. Dabei kann die Primärzustellkraft F_{Z} hydraulisch, elektrisch oder auf andere Weise erzeugt werden.

Die Honsteine 9 weisen zum Zustellkonus 15 komplementär ausgebildete Zustellflächen 8 auf, so dass die axiale Bewegung der Zustellstange 13 in eine radiale Zustellbewegung der Bearbeitungswerkzeuge 9 umgelenkt wird. Die Zustellstange 13 ist mehrteilig ausgebildet.

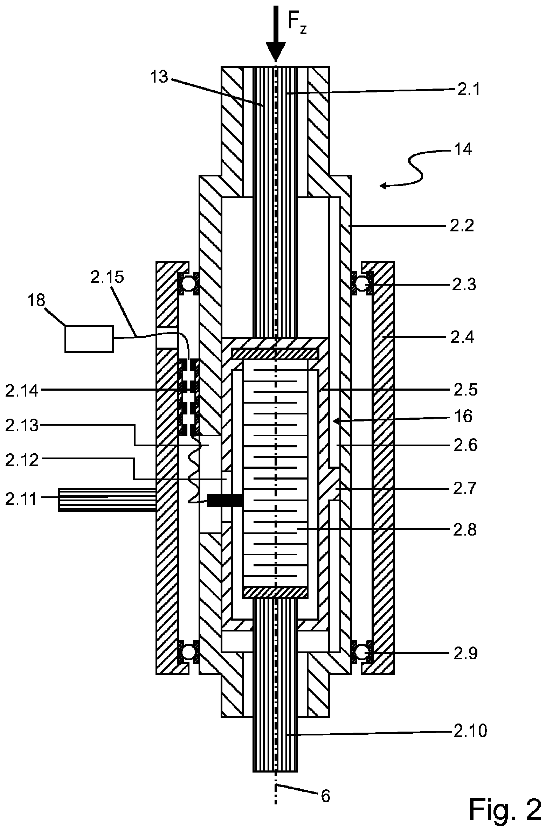

Figur 2 zeigt ein erstes Ausführungsbeispiel der vorliegenden Erfindung das Primärzustellsystem 14 ohne die "vorgelagerte" Einheit 11 zur Erzeugung der Primärzustellkraft im Detail. Das Primärzustellsystem 14 weist ein Gehäuse 2.4 auf, in dem eine drehbare Spindel 2.2 axial geführt ist. Die Spindel 2.2 ist über Radiallager 2.3 und 2.9 im Gehäuse 2.4 gelagert. Somit ist das Gehäuse 2.4 von der Spindel 2.2 rotatorisch entkoppelt. Um Reibmomente der Radiallager 2.3 und 2.9 aufzunehmen, ist eine Drehmomentaufnahme 2.11 vorgesehen, welche an einem hubbewegten Anschlag anliegt.

In der Spindel 2.2 ist die Zustellstange 13 entlang der Längsachse 6 angeordnet. Auf die Zustellstange 13 bzw. auf die Spindel 2.2 wirkt axial eine Primärkraft F_{Z}, die auf das Primärzustellsystem 14 wirkt.

Die Zustellstange 13 ist in dem erfindungsgemäßen Primärzustellsystem 14 dreiteilig ausgebildet. Die Zustellstange 13 umfasst in Figur 2 einen oberen Zustellstift 2.1, einen unteren Zustellstift 2.10 und zwischen den beiden Zustellstiften 2.1 und 2.10 eine hohlzylindrische Aufnahmevorrichtung 2.5, die einen zylindrischen Piezosteller 2.8 aufnimmt.

Im Hohlraum der Aufnahmevorrichtung 2.5 ist der Piezosteller 2.8 an dem in Figur 2 oberen Ende fest angeordnet. Am unteren Ende der Piezoaufnahme 2.5 ist der untere Zustellstift 2.10 angeordnet.

Der Piezosteller 2.8 dehnt sich in Längsrichtung aus, wenn eine elektrische Spannung angelegt wird. Die elektrische Spannung wird über einen Drehverteiler 2.14, der z.B. mit Schleifkontakten versehen ist, oder über einen berührungslosen Energie- und Signalübertrager zum Piezosteller 2.8 geführt. Ein elektrisches Anschlusskabel 2.15 ist an dem Drehverteiler 2.14 angelegt, wobei das Anschlusskabel 2.15 im Innern durch einen länglich ausgebildeten Durchbruch 2.13 des Gehäuses 2.4 und durch einen länglich ausgebildeten Durchbruch 2.12 in die Aufnahmevorrichtung 2.5 zum Piezosteller 2.8 geführt ist. Das Anschlusskabel 2.15 führt nach außen zu einem nicht dargestellten Steuergerät, das den Piezosteller 2.8 so mit elektrischer Spannung versorgt, dass sich die gewünschte werkstückspezifische überlagerte Zustellbewegung ergibt.

Wird nun der Piezosteller 2.8 mit elektrischer Spannung beaufschlagt, so wird dadurch der durch die Zustellkraft F_{Z} des Primärzustellsystems 14 erzeugte Zustellbewegung die zusätzliche oder sekundäre Zustellbewegung des Piezostellers 2.8 überlagert. Dabei bewegt sich der untere Zustellstift 2.10 in Figur 2 nach unten und wirkt auf den Zustellkonus 15 der in Figur 2 nicht dargestellten Honvorrichtung 1 gemäß der Beschreibung zu Figur 1. Der Piezosteller 2.8 mit der Aufnahmevorrichtung 2.5 stellt in dem erfindungsgemäßen Primärzustellsystem 14 ein Sekundärzustellsystem 16 dar, durch das die Bewegung des Primärzustellsystem 14 durch Anlegen der elektrischen Spannung an den Piezosteller 2.8 durch eine zusätzliche Bewegung dynamisch überlagert werden kann.

Die länglichen Durchbrüche 2.12 und 2.13 ermöglichen die axiale Ausdehnung des Sekundärzustellsystems 16, ohne dass die elektrische Kontaktierung des Piezoaktors 2.8 beschädigt wird.

Die Aufnahmevorrichtung 2.5 ist in der Spindel 2.2 geführt und zusätzlich durch eine Nut 2.6 mit einer Passfeder 2.7 drehfest, jedoch axial verschiebbar positioniert.

Die erfindungsgemäße Vorrichtung dient vorzugsweise zum Formhonen von Bohrungen. Das Primärzustellsystem 14 erzeugt dabei eine herkömmliche (Primär-)Zustellbewegung. Das in dem erfindungsgemäßen Primärzustellsystem 14 integrierte Sekundärzustellsystem 16 überlagert dabei die durch die Primärkraft F_{Z} erzeugte Zustellbewegung dynamisch durch eine zusätzliche Zustellbewegung, die durch die Ausdehnung des Piezostellers 2.8 erzeugt wird. Das Sekundärzustellsystem 16 erzeugt die zusätzliche Zustellbewegung vorzugsweise in Abhängigkeit einer aktuellen Dreh- und/oder Hubposition des Primärzustellsystems 14. Die dazu nötige Steuerung geschieht im Steuergerät, das bspw. an Hand von Signalen entsprechend angeordneter Sensoren die aktuelle Dreh- und/oder Hubbewegung ermittelt und zu gegebenen Zeitpunkten die zusätzliche Zustellbewegung auslöst. Die Zustellbewegung wird dabei durch die Zustellstange 13 übertragen, die in ihrer axialen Ausdehnung als Folge des Anlegens der elektrischen Spannung am Piezosteller 2.8 "atmet".

Die dynamische Überlagerung der durch das erfindungsgemäße Primärzustellsystem 14 erzeugten Zustellbewegung durch die Zustellbewegung des Sekundärzustellsystems 16, erfolgt also positionsabhängig und drehwinkelabhängig. Das bedeutet, dass in Abhängigkeit einer bestimmten Position der Bearbeitungswerkzeuge 9 in der Bohrung 4 bzw. der Zustellstange 13, eine dynamische zusätzliche Beaufschlagung der Bearbeitungswerkzeuge 9 lokal erfolgt.

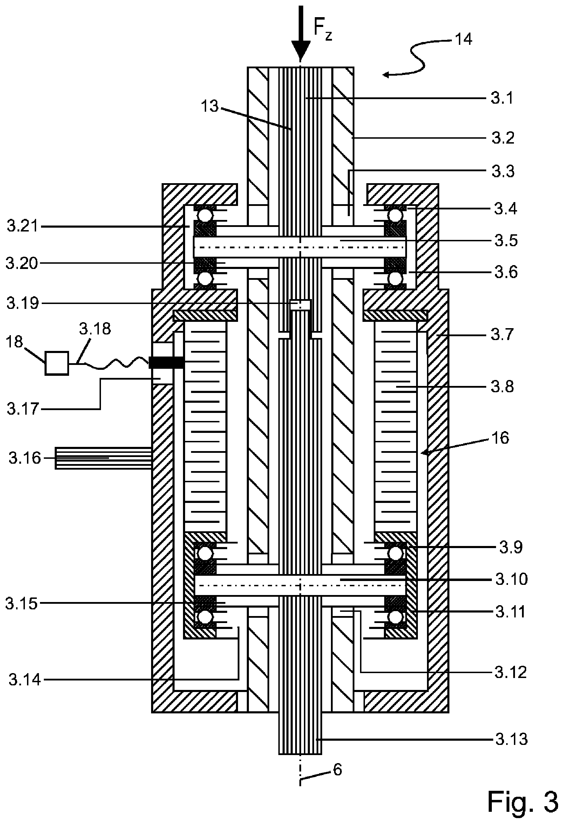

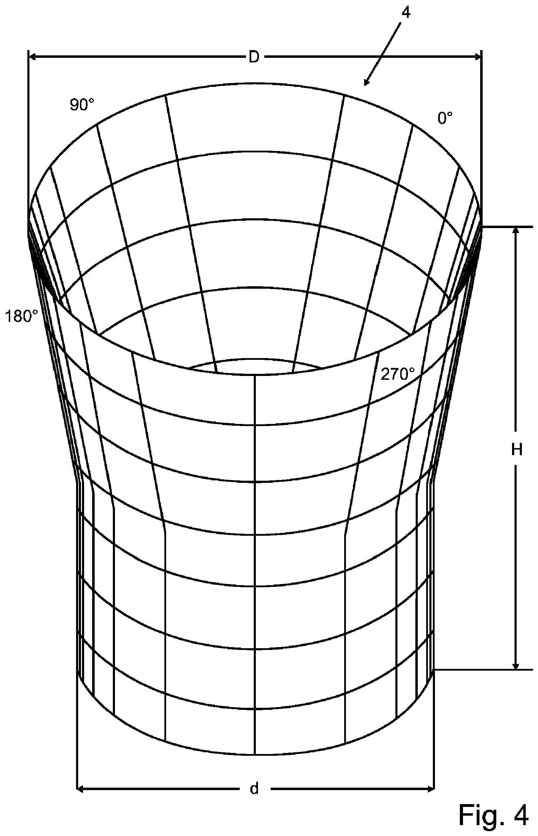

Figur 3 zeigt das Primärzustellsystem 14 in einer zweiten Ausführungsform gemäß der vorliegenden Erfindung im Detail. Auch mit der zweiten Ausführungsform können beispielsweis die in den Figuren 4 bis 6 dargestellten Bohrungen 4 erzeugt werden.

Im zweiten Ausführungsbeispiel weist das Primärzustellsystem 14 ein Gehäuse 3.7 auf, in dem eine drehbare Spindel 3.2 axial geführt ist. In der Spindel 3.2 ist die Zustellstange 13 entlang der Längsachse 6 angeordnet. Auf die Zustellstange 13 wirkt axial die Primärkraft F_{Z}, die vom Primärzustellsystem 14 erzeugt wird. Auch bei der Erläuterung dieses Ausführungsbeispiels beziehen sich die Begriffe "oben" und "unten" auf die in Figur 3 dargestellte Situation.

Ein Piezosteller 3.8 ist zentrisch im Gehäuse 3.7 angeordnet, aber im Gegensatz zur ersten Ausführungsform hohlzylindrisch ausgebildet. Alternativ können auch beispielsweise drei oder mehr zylindrische Piezosteller gleichmäßig über den Umfang verteilt angeordnet werden.

Im Hohlraum des Piezostellers 3.8 rotiert die Spindel 3.2. Die Zustellkraft F z wirkt auf einen in Figur 3 oberen Zustellstift 3.1, der Teil der Zustellstange 13 ist.

Der obere Zustellstift 3.1 weist eine Querbohrung auf, durch die ein Rotationsstift 3.5 hindurchgeführt ist. An diesem oberen Rotationsstift 3.5 ist das Sekundärzustellsystem 16 angeordnet, welches rotatorisch von einem rotierenden oberen Zustellstift 3.1 und von der rotierenden Spindel 3.2 abgekoppelt ist. Der obere Rotationsstift 3.5 ragt mit seinen Enden in die Bohrungen des oberen Rotationsrings 3.20. Am oberen Rotationsring 3.20 liegen beidseitig Axiallager 3.4 und 3.6 an. Der obere Rotationsstift 3.5, der Rotationsring 3.20 und die beiden Axiallager 3.4 und 3.6 bilden das obere Rotationslager 3.21, welches das Gehäuse 3.7 trägt und von der Drehbewegung der Spindel 3.2 mit dem oberen Zustellstift 3.1 rotatorisch abgekoppelt ist.

Eine in Figur 3 dargestellte obere Aussparung 3.3 und eine untere Aussparung 3.12 ermöglichen eine Relativbewegung des Sekundärzustellsystems 16 zur Spindel 3.2 zur Übertragung der von der Zustellkraft F_{Z} des Primärzustellsystems 14 über den äußeren, nicht rotierenden Teil des Sekundärzustellsystems 16 auf einen unteren Zustellstift 3.13.

Im Inneren des Gehäuses 3.7 befindet sich in Figur 3 unterhalb des oberen Rotationslagers 3.21 der hohlzylindrische Piezosteller 3.8. Er ist auf der oberen Seite in axialer und radialer Richtung im Gehäuse 3.7 fest angeordnet und damit rotatorisch von der Spindel 3.2 abgekoppelt. Die elektrische Beaufschlagung des Piezostellers 3.8 erfolgt durch ein Anschlusskabel 3.18.

Durch Anlegen einer elektrischen Spannung dehnt sich der Piezostellers 3.8 aus, welches eine axiale Verschiebung eines unteren Rotationslagers 3.14 bewirkt. Dieses untere Rotationslager 3.14 besteht aus einem unteren Rotationsstift 3.10 und zwei Axiallagern 3.9 und 3.11. Der untere Rotationsstift 3.10 ragt wiederum mit seinen Enden in die Bohrungen des Rotationsrings 3.15 ein. Auf dem unteren Rotationsstift 3.10 ist in axialer Richtung der untere Zustellstift 3.13 fest angeordnet.

Eine Schnittstelle zwischen dem oberen Zustellstift 3.1 und dem unteren Zustellstift 3.13 besteht im Wesentlichen in der Führung 3.19. Mit dieser Führung ist dem unteren Zustellstift 3.13 die Möglichkeit gegeben, sich axial zu verschieben, wenn an den Piezosteller 3.8 eine elektrische Spannung angelegt wird, und somit mit der dadurch erzeugten Zustellkraft des Sekundärzustellsystems 16 temporär, also dynamisch der Zustellkraft F_{Z} zu überlagern. Die dadurch erzeugte (Gesamt-) Zustellbewegung wird dabei auf die Zustellstange 13 übertragen, die in ihrer axialen Ausdehnung als Folge des Anlegens der elektrischen Spannung am dem Piezosteller 3.8 "atmet".

Das Gehäuse 3.7 weist eine Öffnung 3.17 auf, welche den Durchlass der Anschlussleitung 3.18 ermöglicht und ebenso aufgrund seiner länglichen Ausbildung die axiale Verstellung des Piezostellers 3.8 zulässt. Da in der zweiten Ausführungsform der Piezosteller 3.8 nicht rotiert, ist ein fest sitzender elektrischer Anschluss am Piezosteller 3.8 möglich.

In beiden Ausführungsformen ist die Übertragung der überlagernden Zustellbewegung durch das Sekundärzustellsystem 16 kraftgesteuert. Grundsätzlich kann die zu überlagernde Zustellbewegung in beliebiger Weise, also auch elektromechanisch, weggesteuert oder hydraulisch erfolgen.

Die Figuren 4 bis 6 zeigen drei Ausführungsformen von möglichen mit der erfindungsgemäßen Vorrichtung herstellbaren nicht zylindrischen Bohrungen in jeweils einer perspektivischen Darstellung. In den Figuren 4 bis 6 sind die Effekte, die durch das erfindungsgemäße Verfahren erzeugt werden, zur besseren Verdeutlichung stark überzeichnet dargestellt.

Figur 4 zeigt eine erste mit der erfindungsgemäßen Vorrichtung herstellbaren nicht zylindrische Bohrung 4. Figur 4 zeigt eine nicht zylindrische Form mit rundem Querschnitt (0. Ordnung), jedoch mit nicht geraden Mantellinien, sondern zum Beispiel kelchförmige oder konische Bohrungslängsverläufe bei rotationssymmetrischen Formen. Das bedeutet, die Bohrung ist über die gesamte Höhe H im Querschnitt kreisrund. Der Durchmesser vergrößert sich in axialer Richtung jedoch vom Durchmesser d im unteren Bereich der Bohrung auf einen Durchmesser D im oberen Bereich der Bohrung 4.

Eine solche Ausbildung der Bohrung 4 wird in dem erfindungsgemäßen Verfahren dadurch erreicht, dass mit Aufwärtshub der Bearbeitungswerkzeuge 9 die am Piezosteller 2.8, oder 3.8 anliegende elektrische Spannung, also im Sekundärzustellsystem 16, stetig erhöht wird. Dadurch wird die auf die Bearbeitungswerkzeuge 9 wirkende Zustellkraft stetig erhöht, was zu einer stetigen Aufweitung der Bohrung führt. Die Aufweitung bewegt sich bei einem Bohrungsdurchmesser von z. B. 10 mm im Mikrometer-Bereich und ist in Figur 4 stark überhöht dargestellt.

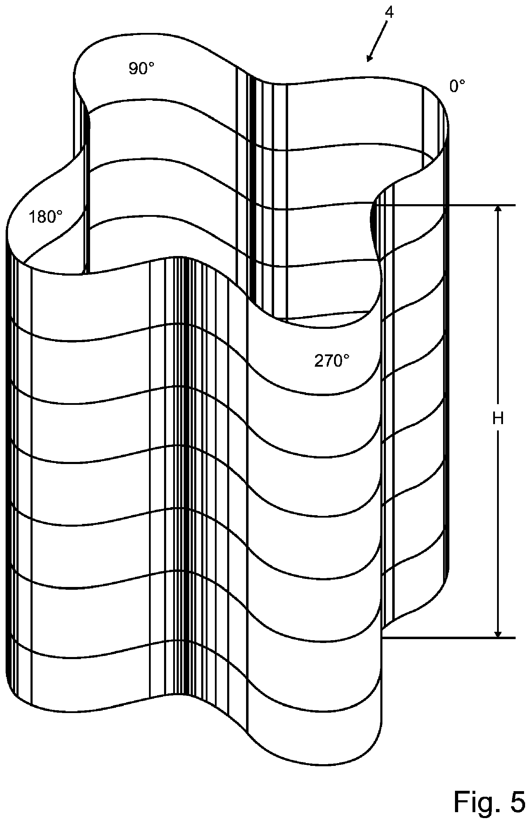

Figur 5 zeigt eine zweite mit der erfindungsgemäßen Vorrichtung herstellbaren nicht zylindrische Bohrung 4. Figur 5 zeigt eine nicht zylindrische Form mit konstanten harmonischen Querschnittsformen (zum Beispiel 2. bis 4. Ordnung), die bspw. als Kleeblatt ausgestaltet ist. Ovale Durchmesser sind mit dem erfindungsgemäßen Verfahren auch realisierbar. Die in Figur 5 gezeigte Form weist über die gesamte Höhe H den gleichen Querschnitt auf; ist also prismatisch. Eine solche Ausbildung der Bohrung 4 wird in dem erfindungsgemäßen Verfahren dadurch erreicht, dass je nach einer bestimmten Drehposition der Zustellstange 13 die anliegende elektrische Spannung am Piezosteller 2.8 kontinuierlich erhöht und reduziert wird. In Figur 5 liegt bei 0°, 90°, 180°und 270° der Zustellstange 13 jeweils die höchste elektrische Spannung am Piezosteller 2.8 an, wobei sie danach wieder reduziert wird, bis sie bei 45°, 135°, 225° und 315° ein Minimum erreicht. Anschließend wird die Spannung wieder erhöht.

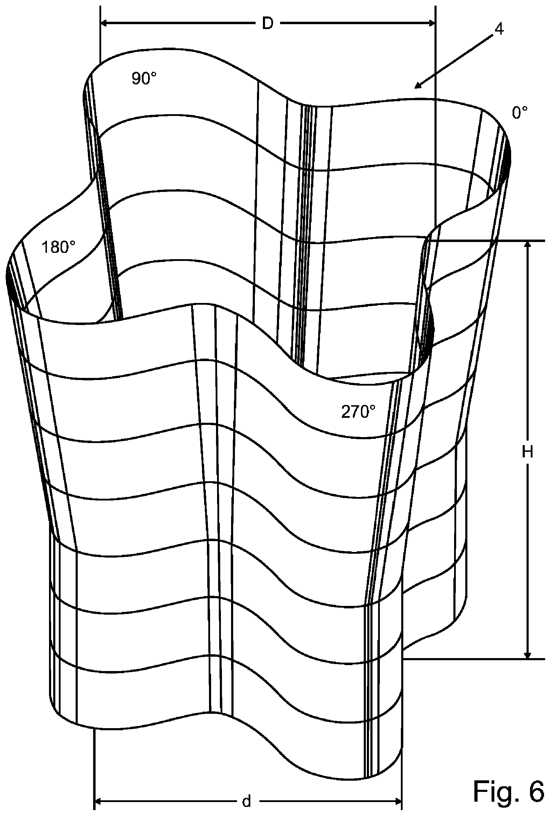

Figur 6 zeigt eine dritte mit der erfindungsgemäßen Vorrichtung herstellbaren nicht zylindrische Bohrung 4. Figur 6 zeigt eine nicht zylindrische Form, die eine Kombination der Bohrungen 4 aus Figur 4 und 5 kombiniert. Das bedeutet, dass eine nicht zylindrische Form einer Bohrung 4 mit harmonischen Querschnittsformen, die bspw. als Kleeblatt ausgestaltet sind, erstellt wird, wobei sich mit zunehmender Höhe der in Figur 6 dargestellte untere Durchmesser d nach oben hin auf den Durchmesser D aufweitet. Dies wird dadurch realisiert, dass das Sekundärzustellsystem 16 die zusätzliche Zustellbewegung in Abhängigkeit einer aktuellen Drehposition und Hubposition des Primärzustellsystems 14 erzeugt, wobei die am Piezosteller 2.8 angelegte elektrische Spannung entsprechend der Beschreibungen zu Figur 4 und 5 eingestellt wird.

## Patentansprüche

1. Vorrichtung zur Erzeugung einer nicht zylindrischen Innenfläche (10) einer Bohrung (4) mit entlang des Umfangs der Bohrung (4) angeordneten und auf die Innenfläche (10) der Bohrung (4) radial zustellbaren Bearbeitungswerkzeugen (9), wobei die Vorrichtung ein Primärzustellsystem (14) umfasst, das eine axial bewegbare Zustellstange (13) zur Betätigung der Bearbeitungswerkzeuge (9) umfasst und dabei eine Primärkraft (Fz) auf mindestens ein Bearbeitungswerkzeug (9) erzeugt, durch die das mindestens eine Bearbeitungswerkzeug (9) auf die Bohrung (4) radial zustellbar ist, **dadurch gekennzeichnet, dass** die Zustellstange (13) einen oberen Zustellstift (3.1; 2.1) und einen unteren Zustellstift (3.13; 2.10) umfasst, dass die Zustellbewegungen des Primärzustellsystems (14) auf den oberen Zustellstift (3.1; 2.1) übertragen werden, dass zwischen dem oberen Zustellstift (3.1; 2.1) und dem unteren Zustellstift (3.13; 2.10) ein Sekundärzustellsystem (16) vorgesehen ist, und dass die Zustellbewegungen des Primärzustellsystems (14) und des Sekundärzustellsystems (16) zu einer Gesamtzustellbewegung addiert werden, die auf den unteren Zustellstift (3.13; 2.10) übertragen wird.

2. Vorrichtung nach Anspruch 1, **dadurch gekennzeichnet, dass** das Sekundärzustellsystem (16) einen oder mehrere Piezosteller (2.8; 3.8) umfasst.

3. Vorrichtung nach Anspruch 1 oder 2, **dadurch gekennzeichnet, dass** das Sekundärzustellsystem (16) zentrisch und koaxial zu dem Primärzustellsystem (14) angeordnet ist.

4. Vorrichtung nach einem der vorhergehenden Ansprüche, **dadurch gekennzeichnet, dass** mehrere Bearbeitungswerkzeuge (9) durch einen einzigen unteren Zustellstift (2.10, 3.13) bewegbar sind, und dass der untere Zustellstift (2.10, 3.13) die Gesamtzustellbewegung auf alle Schneiden (9) eines nachgelagerten Werkzeugs (5) überträgt.

5. Vorrichtung nach einem der vorhergehenden Ansprüche, **dadurch gekennzeichnet, dass** das Sekundärzustellsystem (16) eine Hub- und Drehbewegung des Primärzustellsystems (14) mit ausführt.

6. Vorrichtung nach einem der Ansprüche 1 bis 4, **dadurch gekennzeichnet, dass** das Sekundärzustellsystem (16) von der Drehbewegung des Primärzustellsystems (14) entkoppelt ist.

7. Vorrichtung nach einem der vorhergehenden Ansprüche, **dadurch gekennzeichnet, dass** das Sekundärzustellsystem (16) in axialer Richtung dem Primärzustellsystem (14) nachgelagert ist.

8. Vorrichtung nach einem der vorhergehenden Ansprüche, **dadurch gekennzeichnet, dass** das nachgelagerte Werkzeug ein Honwerkzeug (5) oder ein Werkzeug zum Feinbohren mit einer oder mehreren Schneiden mit geometrische bestimmter Schneide ist.

9. Verfahren zur Erzeugung einer nicht zylindrischen Innenfläche (10) einer Bohrung (4) mit entlang des Umfangs der Bohrung (4) angeordneten und auf die Innenfläche (10) der Bohrung (4) radial zustellbaren Bearbeitungswerkzeugen (9), mitttels einer Vorrichtung nach einem der vorhergehenden Ansprüche, **dadurch gekennzeichnet, dass** die Primärkraft (Fz) durch eine Sekundärkraft dynamisch überlagert wird, die durch ein Sekundärzustellsystem (16) erzeugt wird, wobei das Sekundärzustellsystem (16) in Abhängigkeit einer aktuellen Drehbewegung und/oder Hubbewegung des Primärzustellsystems (14) aktiviert wird.

10. Verfahren nach Anspruch 9, **dadurch gekennzeichnet, dass** das Verfahren mit einer Vorrichtung nach mindestens einem der Ansprüche 1 bis 8 ausgeführt wird.

11. Verfahren nach Anspruch 9 oder 10, **dadurch gekennzeichnet, dass** das Sekundärzustellsystem (16) impulsweise Zustelldruckspitzen erzeugt.

12. Verfahren nach einem der Ansprüche 9 bis 11, **dadurch gekennzeichnet, dass** das Sekundärzustellsystem (16) von vorn herein elektrisch vorgespannt wird, wobei das Sekundärzustellsystem (16) bei einem Zurückfahren der Vorrichtung entlastet wird, indem eine zuvor angelegte Spannung reduziert wird.

13. Steuergerät zum Betreiben einer Vorrichtung zur Erzeugung einer nicht zylindrischen Innenfläche (10) einer Bohrung (4) mit entlang des Umfangs der Bohrung (4) angeordneten und auf die Innenfläche (10) der Bohrung (4) radial zustellbaren Bearbeitungswerkzeugen (9) und mit einem Primärzustellsystem (14), **dadurch gekennzeichnet, dass** das Steuergerät zur Anwendung eines Verfahrens nach einem der Ansprüche 9 bis 12 programmiert ist.

## Claims

1. Device for generating a noncylindrical inner surface (10) of a bore (4) with machining tools (9) arranged along the circumference of the bore (4) and radially fed up to the inner surface (10) of the bore (4), wherein the device comprises a primary advancing system (14), which comprises an axially movable feed rod (13) for activating the machining tools (9) and thereby creates a primary force (Fz) on at least one machining tool (9), by which the at least one machining tool (9) can be radially fed up to the bore (4), **characterized in that** the feed rod (13) comprises an upper feed pin (3,1; 2.1) and a lower feed pin (3.13; 2.10), **in that** the advancement movements of the primary advancing system (14) are transmitted to the upper feed pin (3.1; 2.1), **in that** between the upper feed pin (3.1; 2.1) and the lower feed pin (3.13; 2.10) a secondary advancing system (16) is provided and the advancement movements of the primary advancing system (14) and the secondary advancing system (16) are added to give an overall advancement movement which is transmitted to the lower feed pin (3.13; 2.10) .

2. Device according to claim 1, **characterized in that** the secondary advancing system (16) comprises one or more piezo positioners (2.8; 3.8).

3. Device according to claim 1 or 2, **characterized in that** the secondary advancing system (16) is arranged centrally and axially coaxially to the primary advancing system (14).

4. Device according to one of the preceding claims, **characterized in that** several machining tools (9) can be moved by a single lower feed pin (2.10, 3.13), and the lower feed pin (2.10, 3.13) transmits the overall advancement movement to all cutting blades (9) of a downstream tool (5).

5. Device according to one of the preceding claims, **characterized in that** the secondary advancing system (16) follows along with a stroke and rotary movement of the primary advancing system (14).

6. Device according to one of the claims 1 to 4, **characterized in that** the secondary advancing system (16) is decoupled from the rotary movement of the primary advancing system (14).

7. Device according to one of the preceding claims, **characterized in that** the secondary advancing system (16) is downstream in the axial direction from the primary advancing system (14).

8. Device according to one of the preceding claims, **characterized in that** the downstream tool is a honing tool (5) or a tool for fine boring with one or more cutting blades with geometrically defined cutting blade.

9. Method for generating a noncylindrical inner surface (10) of a bore (4) with machining tools (9) arranged along the circumference of the bore (4) and radially fed up to the inner surface (10) of the bore (4), by means of a device according to one of the preceding claims, **characterized in that** the primary force (Fz) is dynamically superimposed with a secondary force, which is created by a secondary advancing system (16), wherein the secondary advancing system (16) is activated in dependence on a current rotary movement and/or stroke movement of the primary advancing system (14) .

10. Method according to claim 9, **characterized in that** the method is carried out with a device according to at least one of claims 1 to 8.

11. Method according to claim 9 or 10, **characterized in that** the secondary advancing system (16) generates peak advancement pressures as an impulse.

12. Method according to one of claims 9 to 11, **characterized in that** the secondary advancing system (16) is electrically biased from the outset, and the secondary advancing system (16) is relieved of load upon retraction of the device, **in that** a previously imposed voltage is reduced.

13. Control unit for operating a device for generating a noncylindrical inner surface (10) of a bore (4) with machining tools (9) arranged along the circumference of the bore (4) and radially fed up to the inner surface (10) of the bore (4), and with a primary advancing system (14), **characterized in that** the control unit is programmed to employ one of the methods according to one of claims 9 to 12.

## Revendications

1. Dispositif pour la réalisation d'une surface intérieure non cylindrique (10) d'un alésage (4) avec des outils d'usinage (9) disposés le long de la périphérie de l'alésage (4) et pouvant être approchés radialement de la surface intérieure (10) de l'alésage (4), dans lequel le dispositif comprend un système d'approche primaire (14) qui comprend une tige d'approche (13) déplaçable axialement pour l'actionnement des outils d'usinage (9) et génère ainsi une force primaire (F_{z}) sur au moins un outil d'usinage (9), par laquelle le au moins un outil d'usinage (9) peut être approché radialement de l'alésage (4), **caractérisé en ce que** la tige d'approche (13) comprend une broche d'approche supérieure (3.1; 2.1) et une broche d'approche inférieure (3.13; 2.10), **en ce que** les mouvements d'approche du système d'approche primaire (14) sont transmis à la broche d'approche supérieure (3.1; 2.1), **en ce qu'**un système d'approche secondaire (16) est prévu entre la broche d'approche supérieure (3.1; 2.1) et la broche d'approche inférieure (3.13; 2.10), et **en ce que** les mouvements d'approche du système d'approche primaire (14) et du système d'approche secondaire (16) sont additionnés en un mouvement d'approche total qui est transmis à la broche d'approche inférieure (3.13; 2.10).

2. Dispositif selon la revendication 1, **caractérisé en ce que** le système d'approche secondaire (16) comprend un ou plusieurs actionneurs piézoélectriques (2.8; 3.8).

3. Dispositif selon la revendication 1 ou 2, **caractérisé en ce que** le système d'approche secondaire (16) est disposé de manière centrale et coaxiale par rapport au système d'approche primaire (14).

4. Dispositif selon l'une quelconque des revendications précédentes, **caractérisé en ce que** plusieurs outils d'usinage (9) sont déplaçables par une seule broche d'approche inférieure (2.10, 3.13), et **en ce que** la broche d'approche inférieure (2.10, 3.13) transmet le mouvement d'approche total à tous les tranchants (9) d'un outil (5) situé en aval.

5. Dispositif selon l'une quelconque des revendications précédentes, **caractérisé en ce que** le système d'approche secondaire (16) effectue également un mouvement de levage et de rotation du système d'approche primaire (14).

6. Dispositif selon l'une quelconque des revendications 1 à 4, **caractérisé en ce que** le système d'approche secondaire (16) est découplé du mouvement de rotation du système d'approche primaire (14).

7. Dispositif selon l'une quelconque des revendications précédentes, **caractérisé en ce que** le système d'approche secondaire (16) est situé en aval du système d'approche primaire (14) en direction axiale.

8. Dispositif selon l'une quelconque des revendications précédentes, **caractérisé en ce que** l'outil situé en aval est un outil de rodage (5) ou un outil pour l'alésage fin avec un ou plusieurs tranchants à tranchant déterminé géométriquement.

9. Procédé de réalisation d'une surface intérieure non cylindrique (10) d'un alésage (4) avec des outils d'usinage (9) disposés le long de la périphérie de l'alésage (4) et pouvant être approchés radialement de la surface intérieure (10) de l'alésage (4), au moyen d'un dispositif selon l'une quelconque des revendications précédentes, **caractérisé en ce que** la force primaire (F_{z}) est superposée dynamiquement à une force secondaire qui est générée par un système d'approche secondaire (16), dans lequel le système d'approche secondaire (16) est activé en fonction d'un mouvement de rotation et/ou de levage actuel du système d'approche primaire (14).

10. Procédé selon la revendication 9, **caractérisé en ce que** le procédé est réalisé avec un dispositif selon au moins l'une quelconque des revendications 1 à 8.

11. Procédé selon la revendication 9 ou 10, **caractérisé en ce que** le système d'approche secondaire (16) génère des pics de pression d'approche par impulsions.

12. Procédé selon l'une quelconque des revendications 9 à 11, **caractérisé en ce que** le système d'approche secondaire (16) est polarisé électriquement de prime abord, dans lequel le système d'approche secondaire (16) est soulagé lors d'une rétraction du dispositif en réduisant une tension précédemment appliquée.

13. Dispositif de commande pour faire fonctionner un dispositif pour la réalisation d'une surface intérieure non cylindrique (10) d'un alésage (4) avec des outils d'usinage (9) disposés le long de la périphérie de l'alésage (4) et pouvant être approchés radialement de la surface intérieure (10) de l'alésage (4) et avec un système d'approche primaire (14), **caractérisé en ce que** le dispositif de commande est programmé pour l'utilisation d'un procédé selon l'une quelconque des revendications 9 à 12.
